(19) Europäisches Patentamt
European Patent Office
Office européen des brevets

(11) **EP 4 302 610 A1**

(12) **EUROPEAN PATENT APPLICATION**
published in accordance with Art. 153(4) EPC

(43) Date of publication:
**10.01.2024 Bulletin 2024/02**

(21) Application number: **22763570.3**

(22) Date of filing: **02.03.2022**

(51) International Patent Classification (IPC):
***A23L 3/00*** *(2006.01)* ***A23L 3/01*** *(2006.01)*
***A23L 5/10*** *(2016.01)* ***H05B 6/64*** *(2006.01)*

(52) Cooperative Patent Classification (CPC):
**A23L 3/00; A23L 3/01; A23L 5/10; H05B 6/64**

(86) International application number:
**PCT/KR2022/002913**

(87) International publication number:
**WO 2022/186588 (09.09.2022 Gazette 2022/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.03.2021 KR 20210028162**
**03.03.2021 KR 20220012876**

(71) Applicant: **CJ Cheiljedang Corporation**
**Seoul 04560 (KR)**

(72) Inventors:
- **SHINE, Sung Woo**
**Seoul 04560 (KR)**
- **SAGONG, Hun Gu**
**Seoul 04560 (KR)**
- **PARK, Sung Yong**
**Seoul 04560 (KR)**

(74) Representative: **Bandpay & Greuter**
**30, rue Notre-Dame des Victoires**
**75002 Paris (FR)**

(54) **MICROWAVE-COOKABLE SINGLE-CATEGORY FOOD HAVING TWO OR MORE DIVIDED SECTIONS HAVING DIFFERENT PERMITTIVITIES, AND PRODUCTION METHOD AND DESIGN METHOD THEREFOR**

(57) The present application relates to a food having excellent heating properties, and a production method and design method therefor. According to the present application, a temperature difference within the food may be minimized when heating the food by a method such as microwave irradiation or direct heating.

【Figure 1】

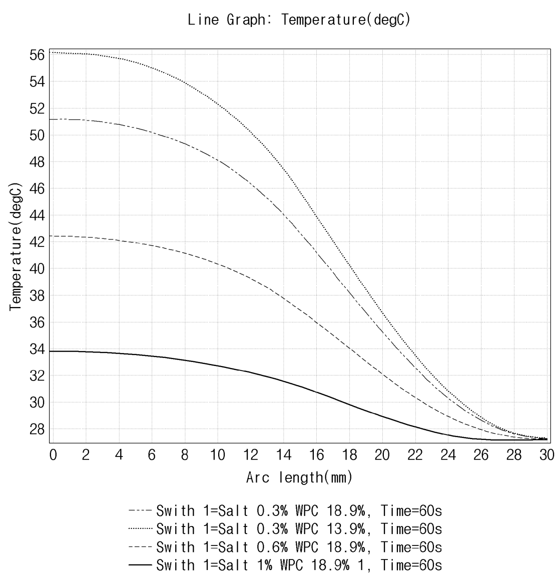


EP 4 302 610 A1

## Description

[Technical Field]

The present invention relates to a microwave-cookable single-category food having two or more divided sections having different permittivities, and a production method and design method therefor.

[Background Art]

From an electrical point of view, materials can be divided into conductors and dielectric materials. A conductor is a material that has free electrons and can conduct electricity well, while a dielectric material is a material that does not conduct electricity well. Permittivity ($\varepsilon$) is a physical description of the dielectric material's response pattern to electricity and electromagnetics.

Permittivity ($\varepsilon$) is an important characteristic value representing the electrical characteristics of a dielectric material, and a material constant that expresses how sensitively the internal +/- moment of a dielectric material reacts to changes in an external electric field. The permittivity also represents the electrical characteristics of DC current, but in relation to food heating, it is directly related to the characteristics of AC current, especially alternating electromagnetic waves. The permittivity varies depending on various factors such as the characteristics of the medium, the frequency of the electromagnetic field applied to the medium, humidity, and temperature. When the frequency is 0 or low enough, the change in permittivity is not large. However, when the phase difference of the response to the change in the electric field increases as the frequency increases, the permittivity is defined in the form of a complex number and is represented by the following formula.

From an electrical point of view, materials can be divided into conductors and dielectric materials. A conductor is a material that has free electrons and can conduct electricity well, while a dielectric material is a material that does not conduct electricity well. Permittivity ($\varepsilon$) is a physical description of the dielectric material's response pattern to electricity and electromagnetics.

Permittivity ($\varepsilon$) is an important characteristic value representing the electrical characteristics of a dielectric material, and a material constant that expresses how sensitively the internal +/- moment of a dielectric material reacts to changes in an external electric field. The permittivity also represents the electrical characteristics of DC current, but in relation to food heating, it is directly related to the characteristics of AC current, especially alternating electromagnetic waves. The permittivity varies depending on various factors such as the characteristics of the medium, the frequency of the electromagnetic field applied to the medium, humidity, and temperature. When the frequency is 0 or low enough, the change in permittivity is not large. However, when the phase difference of the response to the change in the electric field increases as the frequency increases, the permittivity is defined in the form of a complex number and is represented by the following formula.

From an electrical point of view, materials can be divided into conductors and dielectric materials. A conductor is a material that has free electrons and can conduct electricity well, while a dielectric material is a material that does not conduct electricity well. Permittivity ($\varepsilon$) is a physical description of the dielectric material's response pattern to electricity and electromagnetics.

Permittivity ($\varepsilon$) is an important characteristic value representing the electrical characteristics of a dielectric material, and a material constant that expresses how sensitively the internal +/- moment of a dielectric material reacts to changes in an external electric field. The permittivity also represents the electrical characteristics of DC current, but in relation to food heating, it is directly related to the characteristics of AC current, especially alternating electromagnetic waves. The permittivity varies depending on various factors such as the characteristics of the medium, the frequency of the electromagnetic field applied to the medium, humidity, and temperature. When the frequency is 0 or low enough, the change in permittivity is not large. However, when the phase difference of the response to the change in the electric field increases as the frequency increases, the permittivity is defined in the form of a complex number and is represented by the following formula.

$$\varepsilon = \varepsilon' - j\varepsilon'' = \varepsilon_0\varepsilon_r = \varepsilon_0(\varepsilon'_r - j\varepsilon''_r)$$

$$\varepsilon_0 = 8.854 * 10^{-12}\ \mathrm{F/m}$$

$\varepsilon_r$ = Relative Permittivity

In the above formula, $\varepsilon'$ is the real part of the permittivity called the Dielectric Constant, and it is the part related to the wavelength and propagation of electromagnetic waves. $\varepsilon''$ is the imaginary part of the permittivity called the Loss Factor and is an item related to the energy absorption rate and loss by the medium. If ε" is a positive number at a specific frequency, energy loss occurs, which mainly appears in the form of heat generation. $\varepsilon_0$ is the dielectric constant in vacuum. $\varepsilon_r$ is relative permittivity, which expresses the dielectric material's permittivity as a ratio of the dielectric constant in a vacuum state, and is a way of expressing general permittivity.

The amount of heat generated by permittivity can be expressed by the following formula.

$$Q = 2\pi f \varepsilon'' \varepsilon_0 E^2$$

In the case of microwave cooking, which is often used for heating and cooking food, this permittivity-based heating is technically based, but most microwave cooking methods are completely dependent on the performance and characteristics of the microwave oven. Even in the improvement of cooking quality, technology is being developed only in a 'device-oriented' form, such as installing a separate device inside the microwave oven or installing an accessory that changes the electric field on the packaging, but this frequently occurs ineffective depending on the property of the product. It is necessary to research and develop a method to improve the heating effect by approaching these problems from the viewpoint of the product, which is the actual purpose of heating.

[Prior Art Documents]

[Patent Document]

(Patent Document 1) US Laid-open Patent Publication No. US 2016/0331004

[Disclosure]

[Technical Problem]

One object of the present invention is to provide a food capable of uniform heating when heated by microwave irradiation.

Another object of the present invention is to provide a method for manufacturing the food capable of uniform heating when heated by microwave irradiation.

Still another object of the present invention is to provide a method for designing the food capable of uniform heating.

[Technical Solution]

In order to achieve the above purpose,
one aspect of the present invention provides a single-category food including two or more divided sections having different permittivities, wherein the food is uniformly heated by microwave irradiation.

Another aspect of the present invention provides a production method for a food uniformly heated by microwave irradiation comprising the steps of:

(a) dividing a single-category food into two or more parts;
(b) differentiating components or their contents that affect permittivity in the two or more parts so that the two or more divided parts have different permittivities; and
(c) producing a single-category food containing two or more divided sections having different permittivities using two or more parts having different permittivities.

Still another aspect of the present invention provides a method of designing a structure of a divided section in a single-category food to improve heating uniformity comprising the steps of:

(a) measuring one or more characteristic values selected from the group consisting of permittivity, specific heat, thermal conductivity, density and porosity of the food;
(b) evaluating non-uniformity of heating of the single-category food using the measured characteristic value and the heating characteristic data of a heating device; and
(c) determining the number, size, or positional relationship of the divided section in the food, and adjusting the characteristic values of the food within the divided section, when non-uniformity of heating of the single-category food exists.

Hereinafter, the present invention will be described in detail.

According to one aspect of the present invention, a single-category food comprising two or more divided sections having different permittivities, wherein the food is uniformly heated by microwave irradiation, is provided.

The present invention provides a food that has a characteristic that the temperature inside the food is uniformly heated when the food is heated by microwave irradiation, by artificially forming two or more divided sections having different permittivities within a single-category food.

Herein, the term "permittivity" refers to a material constant indicating the magnitude of polarization created by a dielectric material in response to an external electric field. The larger the permittivity, the larger the polarization of the dielectric material and the smaller the electric field inside the dielectric material.

In one embodiment, the two or more divided sections having different permittivities may have different dielectric constants or dielectric loss factors.

Herein, the term "dielectric constant" means the ratio between the permittivity of a certain material and the permittivity of vacuum, and is also called relative permittivity (relative dielectric constant).

Herein, the term "dielectric loss factor" is a measure of the loss of a dielectric material, and means a loss factor of energy within the dielectric material through which current passes.

In one embodiment, the characteristic value difference between the divided section with the highest dielectric constant or dielectric loss factor and the divided section with the lowest dielectric constant or dielectric loss factor among the divided sections having different permittivities may be 95% or less of the characteristic value in the divided section with the highest dielectric constant or dielectric loss factor.

The characteristic values in the divided section may be one or more characteristic values selected from the group consisting of permittivity, specific heat, thermal conductivity, density, and porosity.

Herein, the two or more divided sections having different permittivities may have different components or their contents that affect permittivity. Or, the two or more divided sections having different permittivities may have different permittivities due to different manufacturing methods, even if the components or their contents that affect permittivity are the same.

In one embodiment, the component affecting the permittivity may be at least one selected from the group consisting of water, salt, protein, carbohydrate and fat.

The salt is a salt that can be added to food, and any salt that can form a polarization when dissolved in water can be used without limitation. The salt may include, for example, a sodium salt, a potassium salt, an ammonium salt, a magnesium salt, or a calcium salt, but is not limited thereto.

The protein is a protein that can be added to food, and any protein that can exhibit unique dielectric properties when mixed with other ingredients and applied with an electric field can be used without limitation. The protein may include, for example, egg white, soybean protein, whey protein, insect-derived protein, whey protein concentrate (WPC), whey protein isolate (WPI), albumin, globulin, glutelin, prolamin, albuminoid, histone, or protamine, but is not limited thereto.

The carbohydrate is a carbohydrate that can be added to food, and any material that can exhibit unique dielectric properties when mixed with other ingredients and applied with an electric field can be used without limitation. For example, it may include polysaccharides, monosaccharides, sugar alcohols, starches, sugars, and dietary fibers, and may specifically include D-ribose, trehalose, or sorbitol.

The fat is a fat that can be added to food, and any material that can exhibit unique dielectric properties when mixed with other ingredients and applied with an electric field can be used without limitation. For example, it may include saturated fatty acids or unsaturated fatty acids, and may include animal fats and oils such as lard and beef tallow, and vegetable oils extracted from vegetable sources such as soybeans, rapeseed, and rice.

Herein, the term "single-category food" means a food that can be conventionally recognized as one category. More specifically, the single-category food means a food part that can be recognized as one part in terms of food design and is manufactured in the same way through the same ingredient combination within the food.

Specifically, the single-category food itself may be food distributed to consumers or a combination of the single-category foods may be food distributed to consumers, which may appear in different aspects depending on the type of food.

More specifically, a single-category food may mean a portion rather than each ingredient. More specifically, the meaning of food manufactured in the same method through the same ingredient combination in food means that, when a plurality of single-category foods are included in the final product, each single-category food has the same ingredient combination. For example, in the case of fried rice, the entire fried rice can be a single-category food, and in the case of dumplings, the dumpling skin and dumpling filling can each be a single-category food. In the case of a hot dog, the bread portion and the sausage portion may be each single-category food, and in the case of a pasta product including sauce, the noodles portion and the sauce portion may be each single-category food. For the same type of single-category food, the formulation and manufacturing method may be different for each single-category food. For example, in the case of a hot dog, each of the bread portion and the sausage portion is a single-category food, and even if it is a sausage, each product's formulation and manufacturing method may be different for each product. Herein, the single-category food may refer to each part of a food that can be generally recognized as one category in the food industry.

Herein, the single-category food may be food manufactured in the same way before forming the divided sections described later.

The present invention is characterized in that food of one category prepared in the same way using the same combination of ingredients is artificially divided so that the divided areas have different permittivity. Therefore, herein, the divided sections with different permittivities can be formed within a single-category food.

Since the present invention is characterized by artificially creating the divided sections with different permittivities within a single-category food, in the case of a food consisting of two or more single-category foods, this does not mean that the permittivity of each single-category food is different from each other. For example, it does not mean that dumpling skin and dumpling filling have different permittivity.

Herein, the form in which the two or more divided sections having different permittivities are formed is not particularly limited. More specifically, the divided section formation may be changed according to the type, shape, or property of food. Therefore, the structure is not limited as long as the divided sections with different permittivity are formed and the heating non-uniformity by microwave irradiation is small.

In one embodiment, the two or more divided sections having different permittivities may form a layered form by adjoining one divided section to another divided section.

In one embodiment, one divided section of the two or more divided sections having different permittivities may be interspersed within another divided section.

In one embodiment, the two or more divided sections having different permittivities may have a core-shell shape in which one divided section surrounds another divided section.

Herein, the meaning of being uniformly heated by microwave irradiation means that the thermal deviation, more specifically, the coefficient of variation, decreased when the single-category food included the two or more divided sections with different permittivities than when it did not include the two or more divided sections with different permittivities. The reduction of the thermal deviation means that the temperature deviation of a specific point during microwave irradiation, more specifically, the coefficient of variation is reduced. More specifically, the coefficient of variation may be reduced by 3%, 3.5%, 4%, 4.5%, or 5% or more than before the permittivity change.

According to another aspect of the present invention, a production method for a food uniformly heated by microwave irradiation including the following steps is provided:

(a) dividing a single-category food into two or more parts;
(b) differentiating components or their contents that affect permittivity in the two or more parts so that the two or more divided parts have different permittivities; and
(c) producing a single-category food containing two or more divided sections having different permittivities using two or more parts having different permittivities.

In the step (a), dividing the single-category food into two or more parts can be performed in various ways without limitation depending on the type, shape, or property of the food, or the degree of completeness of cooking. More specifically, the meaning of dividing into two or more parts means dividing the structure of a single-category food manufactured in the same way through the same ingredient combination, in order to produce a food with two or more parts with artificially different permittivity, that is, in order to manufacture it by dividing it into two or more parts according to the designed food structure. For example, a single-category food that has been cooked may be divided into two or more portions, raw food ingredients may be divided into two or more portions prior to cooking the single-category food, or a semi-finished product in the intermediate stages of cooking of a single-category food may be divided into two or more parts.

In the step (b), the components or their contents that affect the permittivity are made different from each other so that the divided two or more parts have different permittivities.

In one embodiment, the component affecting the permittivity may be at least one selected from the group consisting of water, salt, protein, carbohydrate, and fat.

The salt is a salt that can be added to food, and any salt that can form a polarization when dissolved in water can be used without limitation. The salt may include, for example, a sodium salt, a potassium salt, an ammonium salt, a magnesium salt, or a calcium salt, but is not limited thereto.

The protein is a protein that can be added to food, and any protein that can exhibit unique dielectric properties when mixed with other ingredients and applied with an electric field can be used without limitation. The protein may include, for example, egg white, soybean protein, whey protein, insect-derived protein, whey protein concentrate (WPC), whey protein isolate (WPI), albumin, globulin, glutelin, prolamin, albuminoid, histone, or protamine, but is not limited thereto.

The carbohydrate is a carbohydrate that can be added to food, and any material that can exhibit unique dielectric properties when mixed with other ingredients and applied with an electric field can be used without limitation. For example, it may include polysaccharides, monosaccharides, sugar alcohols, starches, sugars, and dietary fibers, and may specifically include D-ribose, trehalose, or sorbitol.

The fat is a fat that can be added to food, and any material that can exhibit unique dielectric properties when mixed with other ingredients and applied with an electric field can be used without limitation. For example, it may include saturated fatty acids or unsaturated fatty acids, and may include animal fats and oils such as lard and beef tallow, and vegetable oils extracted from vegetable sources such as soybeans, rapeseed, and rice.

In the step (c), in the case of manufacturing the single-category food including the two or more divided sections having different permittivities using two or more parts having different permittivities, the shape of the two or more divided sections is not particularly limited.

In one embodiment, in the step (c), the single-category food may be produced so that the two or more divided sections having different permittivities forms a layered form by adjoining one divided section to another divided section.

In another embodiment, in the step (c), the single-category food may be produced so that one divided section of the two or more divided sections having different permittivities is interspersed within another divided section.

In another embodiment, in the step (c), the single-category food may be produced so that the two or more divided sections having different permittivities have a core-shell shape in which one divided section surrounds another divided section.

Specifically, the food may be prepared as follows.

When the single-category food has a non-standardized form, the single-category food containing two or more divided sections with different permittivities can be prepared by manufacturing raw materials, semi-finished products or parts of two or more types of foods with different permittivity, and alternately stacking the raw materials, semi-finished products or parts of foods with different permittivity.

The stacking may be performed using various methods depending on the type of food, for example, using a device such as a nozzle, bucket, or auto-scaler, or using an injection method in the case of food in which particles and liquid are mixed.

When single-category food is in the form of a low-viscosity paste, a form in which the liquid phase solidifies or freezes into a solid during processing, or a form that can be mixed during structure formation, different methods may be used depending on the viscosity of the food raw material to form a layered structure. For example, when the viscosity of the food raw material is sufficient, after manufacturing two or more kinds of food raw materials having different permittivities, a layered structure may be formed using a laminated injection nozzle. If the viscosity of the food raw material is not sufficient, a food raw material prepared in a certain mold is filled to form a first layer, then frozen or solidified, and a food raw material having a different permittivity is filled again on the first layer to form a second layer, and then frozen or solidified to form a layered structure. The process of forming the first layer and the second layer may be repeated two or more times.

When single-category food is in a form in which it is difficult to physically form a layered structure, a method of laminating two or more types of foods obtained by immersion in an immersion liquid so that permittivity is different can be used. Alternatively, a method of injecting an immersion liquid or an injection liquid that can be adjusted to have different permittivity into the deep layer of the product and immersing the surface layer in the immersion liquid may be used. The immersion liquid may include one or more components selected from the group consisting of water, salt, protein, carbohydrate, and fat, which affect the permittivity described above.

After preparing the food including the two or more divided sections, an additional process, for example, a filling process, a freezing process, a sterilization process, or a heat treatment process may be further performed.

According to another aspect of the present invention, a method of designing a structure of a divided section in a single-category food to improve heating uniformity comprising the following steps is provided:

(a) measuring one or more characteristic values selected from the group consisting of permittivity, specific heat, thermal conductivity, density and porosity of the single-category food;
(b) evaluating non-uniformity of heating of the single-category food using the measured characteristic value and the heating characteristic data of a heating device; and
(c) determining the number, size, or positional relationship of the divided section in the food, and adjusting the characteristic values of the food within the divided section, when non-uniformity of heating of the single-category food exists.

In one embodiment, the heating characteristic data of the heating device in the step (b) may be heating characteristic data by electromagnetic, radiation or convection.

More specifically, the heating characteristic data means data by heating device, data by heating device characteristics (e.g., output value, output time, fan rotation speed of the device, wind speed or air volume data according to fan rotation speed, algorithm controlling the heat source of the device, etc.), data by food characteristics (e.g. data per salt concentration, data per protein concentration), temperature data of each category or spot within single-category food, temperature change rate data, data of the spot with the highest temperature within single-category food, or movement change data of the spot with the highest temperature, and the like.

The heating device may be a microwave irradiation device (microwave oven), an electric oven, or a gas oven.

In one embodiment, the evaluation of the non-uniformity of heating of the single-category food in the step (b) may be performed by analyzing the change or movement pattern of the heating spot inside the single-category food.

Herein, the term "heating spot" refers to a portion that exhibits a higher temperature than the surrounding portion when the temperature inside the food is measured.

Specifically, the heating spot may be a heating spot formed inside the food when heat treatment is performed on the food through a heating device.

When a heating spot exists inside the food, when the heating spot changes, or when the heating spot moves, it can be determined that the non-uniformity of heating of the food exists.

In the step (c), if it is determined that there is non-uniformity of heating in the food, the number, size or positional relationship of the divided sections in the food is determined, and the characteristic value of the food is adjusted within the divided section.

Adjustment of the number, size, positional relationship, and characteristic values of the divided sections can be determined by analyzing the number or location of heating spots.

The characteristic value of food controlled within the divided section may be one or more values selected from the group consisting of permittivity, specific heat, thermal conductivity, density and porosity.

In one embodiment, the adjustment of the characteristic values of the food within the divided section may be adjusted so that the uniformity of heating of the food is improved when the food is heated through a heating device.

In one embodiment, the food can be a single-category food.

In one embodiment, the food may be a conventionally existing food or a new food.

In one aspect of the present invention, "method for designing the structure of divided sections in the food to improve the heating uniformity of the food", the common content such as single-category food and divided section is the same as those described in the other aspect of the present invention described above, so it will not be repeatedly described.

[Advantageous Effects]

According to the present invention, it is possible to manufacture food capable of minimizing the temperature deviation within the food when heated by a method such as microwave irradiation or direct heating. According to the present invention, it is possible not only to provide food that can be heated uniformly during microwave irradiation, but also to design the structure of food to have heating uniformity during microwave irradiation. However, the effects of the present invention are not limited to the effects mentioned above, and other effects not mentioned will be clearly understood by those skilled in the art from the following description.

[Description of Drawings]

Fig. 1 is a graph analyzing the temperature in the vertical direction of the center of the sample when heated by microwave irradiation for 4 samples designed with different concentrations of salt and WPC.

Fig. 2 is a graph analyzing the temperature in the horizontal direction of the center of the sample when heated by microwave irradiation for 4 samples designed with different concentrations of salt and WPC.

Fig. 3 is a graph showing the temperature increase in the center of the sample according to the heating time by microwave irradiation for 4 samples designed with different concentrations of salt and WPC.

Fig. 4 is the result of checking the heating pattern of the upper part of heating bodies 1 and 2 of Experimental Example 4 of the present invention with ThermalLight View.

Fig. 5 is the result of checking with ThermalLight View by vertically cutting heating bodies 1 and 2 of Experimental Example 4 of the present invention from the top center to the bottom center.

Fig. 6 is a graph showing the temperature distribution of the vertical and horizontal parts passing through the centers of heating bodies 1 and 2 of Experimental Example 4 of the present invention.

Fig. 7 is a graph showing the temperature distribution from left to right by cutting heating bodies 1 and 2 in the horizontal direction in Experimental Example 4 of the present invention.

[Best Mode]

Hereinafter, the present application will be described in detail by Examples. However, the following Examples specifically illustrate the present application, and the contents of the present application are not limited by the following Examples.

**Example**

**Experimental Example 1: Measurement of change in permittivity according to sodium content**

As an experimental group, Test 1, Test 2, and Test 3 were prepared by mixing distilled water, salt, D-ribose, WPC (Whey Protein Concentrate), and WPI (Whey Protein Isolate) at a constant ratio and varying the salinity to 0.3%, 0.6%, and 1%. (Table 1). The dielectric constant and loss factor were measured using Agilent's Vector Network Analyzer. The dielectric constant (E') and loss factor (E") were measured for two frequencies, such as 915MHz and 2450MHz, which are frequently used in domestic and foreign microwave ovens.

[Table 1]

| Ingredient Name | Test 1 | Test 2 | Test 3 |
|---|---|---|---|
| DI water | 75.4 | 75.1 | 74.7 |
| Salt | 0.3 | 0.6 | 1.0 |
| D-ribose | 0.2 | 0.2 | 0.2 |
| WPC | 18.9 | 18.9 | 18.9 |
| WPI | 5.2 | 5.2 | 5.2 |
| Total | 100.0 | 100.0 | 100.0 |

[Table 2]

| | | Test 1 | | Test 2 | | Test 3 | |
|---|---|---|---|---|---|---|---|
| 915MHz | Temp. | E' | E" | E' | E" | E' | E" |
| | 25°C | 54.66 | 22.19 | 54.93 | 27.99 | 55.20 | 36.29 |
| | 30°C | 53.34 | 23.12 | 54.12 | 28.72 | 53.87 | 37.15 |
| | 40°C | 52.05 | 24.47 | 53.08 | 30.35 | 52.68 | 40.02 |
| | 50°C | 50.90 | 26.63 | 52.44 | 31.97 | 51.86 | 43.63 |
| | 60°C | 49.63 | 29.42 | 51.63 | 34.56 | 51.16 | 47.53 |
| | 70°C | 48.53 | 32.17 | 50.43 | 38.94 | 50.24 | 53.25 |
| | 80°C | 47.65 | 34.86 | 49.16 | 44.32 | 49.49 | 59.11 |
| | 90°C | 46.90 | 37.86 | 48.26 | 49.06 | 48.76 | 66.16 |
| | 100°C | 46.37 | 40.78 | 47.69 | 53.61 | 48.43 | 71.54 |
| | 110°C | 45.97 | 44.36 | 47.61 | 58.39 | 48.30 | 78.64 |
| | 120°C | 45.57 | 47.87 | 47.14 | 62.98 | 48.11 | 86.30 |

(continued)

| | Temp. | E' | E" | E' | E" | E' | E" |
|---|---|---|---|---|---|---|---|
| 2450MHz | 25°C | 51.27 | 15.77 | 50.80 | 18.85 | 50.76 | 21.60 |
| | 30°C | 50.19 | 15.69 | 50.06 | 18.70 | 49.36 | 21.81 |
| | 40°C | 48.98 | 15.55 | 49.11 | 18.69 | 48.18 | 22.19 |
| | 50°C | 47.84 | 15.74 | 48.48 | 18.86 | 47.32 | 22.99 |
| | 60°C | 46.51 | 16.23 | 47.66 | 19.32 | 46.49 | 24.02 |
| | 70°C | 45.30 | 16.89 | 46.33 | 20.34 | 45.34 | 25.74 |
| | 80°C | 44.25 | 17.65 | 44.80 | 21.91 | 44.32 | 27.65 |
| | 90°C | 43.29 | 18.59 | 43.61 | 23.48 | 43.26 | 30.13 |
| | 100°C | 42.50 | 19.60 | 42.75 | 25.09 | 42.60 | 32.14 |
| | 110°C | 41.78 | 20.89 | 42.32 | 26.89 | 42.00 | 34.75 |
| | 120°C | 41.03 | 21.98 | 41.88 | 28.35 | 41.32 | 37.72 |

As a result of the measurement, it was confirmed that when the salinity increased, the change in the dielectric constant was not large, but the change in the loss factor was relatively large (Table 2).

**Experimental Example 2: Measurement of change in permittivity according to protein content (whey protein concentrate)**

As an experimental group, Test 1 and Test 2 were prepared by mixing distilled water, salt, D-ribose, WPC (Whey Protein Concentrate), and WPI (Whey Protein Isolate) at a constant ratio and varying the WPC content to 18.9% and 13.9%. (Table 3). The dielectric constant and loss factor of the experimental groups were measured using Agilent's Vector Network Analyzer. The dielectric constant (E') and loss factor (E") were measured for two frequencies, such as 915MHz and 2450MHz, which are frequently used in domestic and foreign microwave ovens.

[Table 3]

| Ingredient Name | Test 1 | Test 2 |
|---|---|---|
| DI water | 75.4 | 80.4 |
| Salt | 0.3 | 0.3 |
| D-ribose | 0.2 | 0.2 |
| WPC | 18.9 | 13.9 |
| WPI | 5.2 | 5.2 |
| Total | 100.0 | 100.0 |

[Table 4]

| | | Test 1 | | Test 2 | |
|---|---|---|---|---|---|
| 915MHz | Temp. | E' | E" | E' | E" |
| | 25°C | 54.66 | 22.19 | 58.68 | 20.82 |
| | 30°C | 53.34 | 23.12 | 57.38 | 20.92 |
| | 40°C | 52.05 | 24.47 | 56.21 | 22.28 |

(continued)

| | | Test 1 | | Test 2 | |
|---|---|---|---|---|---|
| | Temp. | E’ | E" | E’ | E" |
| | 50°C | 50.90 | 26.63 | 54.99 | 24.00 |
| | 60°C | 49.63 | 29.42 | 53.79 | 25.92 |
| | 70°C | 48.53 | 32.17 | 52.38 | 28.05 |
| | 80°C | 47.65 | 34.86 | 50.91 | 30.20 |
| | 90°C | 46.90 | 37.86 | 49.51 | 32.95 |
| | 100°C | 46.37 | 40.78 | 47.79 | 36.86 |
| | 110°C | 45.97 | 44.36 | 46.86 | 40.72 |
| | 120°C | 45.57 | 47.87 | 46.52 | 45.64 |
| 2450MHz | Temp. | E’ | E" | E’ | E" |
| | 25°C | 51.27 | 15.77 | 55.63 | 16.06 |
| | 30°C | 50.19 | 15.69 | 54.45 | 15.74 |
| | 40°C | 48.98 | 15.55 | 53.44 | 15.45 |
| | 50°C | 47.84 | 15.74 | 52.32 | 15.38 |
| | 60°C | 46.51 | 16.23 | 51.16 | 15.52 |
| | 70°C | 45.30 | 16.89 | 49.74 | 15.82 |
| | 80°C | 44.25 | 17.65 | 48.21 | 16.24 |
| | 90°C | 43.29 | 18.59 | 46.73 | 16.92 |
| | 100°C | 42.50 | 19.60 | 44.85 | 18.06 |
| | 110°C | 41.78 | 20.89 | 43.74 | 19.35 |
| | 120°C | 41.03 | 21.98 | 43.11 | 21.15 |

As a result of the measurement, it was confirmed that the dielectric constant value increased in the experimental group with reduced protein content and increased water content, and there was no significant difference in the loss factor (Table 4).

**Experimental Example 3: Change in heating pattern by change of permittivity**

A model test was conducted to confirm how the difference in dielectric constant and dielectric loss factor caused by the difference in salinity and protein content affects the heating temperature of the product during microwave irradiation. Four samples were designed in the form of a hexahedron of 30 mm * 30 mm * 30 mm, with different concentrations of salt and WPC (Table 5). In order to minimize variables other than permittivity for the designed sample, the samples were heated for 1 minute without rotation with a 70W output in a single mode 2.45GHz electric field.

**1. Total amount of energy absorbed by sample**

All four samples were heated with the same power in the same shape and location, but there was a difference in the total amount of energy absorbed (Table 5). This is caused by the difference in form and intensity of the electric field that is absorbed/reflected from the surface of the sample and penetrated into the inside of the sample due to the difference in permittivity. Therefore, it was found that the difference in the final absorption energy occurred due to the difference in permittivity of the sample even under the same conditions.

[Table 5]

| Sample | Total Power Absorption (J/s) |
|---|---|
| Salt 0.3% + WPC 18.9% | 30.69 |
| Salt 0.3% + WPC 13.9% | 31.4 |
| Salt 0.6% + WPC 18.9% | 29.4 |
| Salt 1% + WPC 18.9% | 27.34 |

**2. Temperature in vertical direction of central part of sample**

As shown in the graph of Fig. 1, which is a temperature graph from the left side, the bottom (center) of the product, to the right side, the top (center), all types have a common characteristic that the temperature of the lower part is relatively high, but there was a difference of about 20 °C depending on the permittivity.

**3. Temperature in horizontal direction of central part of sample**

As shown in the graph of Fig. 2 showing the temperature distribution penetrating the center of the product from the electromagnetic wave applying unit (left) to the cavity wall unit (right side), it can be seen that the temperature distribution is different depending on the permittivity. It can be seen that all products are divided into three parts that are heated from left to right, and the higher the salinity of the sample, the higher the temperature of the electromagnetic wave application part (left) and the lower it goes to the right. It can be seen that the lower the salinity and the lower the protein, the higher the temperature rise in the central part, and a difference of up to 14°C. This is inferred to be due to the dielectric characteristics that the penetration depth is low and the heat generation is strong as the loss factor is relatively high while the electromagnetic wave applied from the electromagnetic wave application unit passes through the left side of the product. The lower the loss factor, the deeper the penetration depth, and it seems to be due to the characteristic of showing a pattern in which the remaining energy is heated at the attenuation wavelength position.

**4. Temperature change in central part of sample with heating time**

The graph of Fig. 3 shows the temperature rise of the central part of the sample while heating each sample for 60 seconds, and it can be seen that the difference in the temperature of the central part is very large depending on the dielectric properties. As in the previous patterns, it was found that the lower the salinity and protein content, the greater the temperature increase in the central part. As can be seen from the above results, it was confirmed that a 5% level change in the dielectric constant and a 5 to 30% change in the loss factor indicate a significant difference (15°C/min) in the heating rate and final temperature of the product. Considering that the heating time of general refrigerated/frozen microwave heating products is about 2 to 10 minutes, it was confirmed that the difference in permittivity causes a temperature difference at a level that can directly affect the possibility of eating and safety of the product. It was found that the heating time and speed by the same microwave can be adjusted by adjusting this. As can be seen from the above experimental results, it was found that in the case of electromagnetic wave heating, even when the irradiation pattern of the device that irradiates electromagnetic waves (microwave oven) and the shape of the product are all the same, the heating pattern is completely different depending on the characteristics of the heating body. In addition, it was found that electromagnetic energy was consumed as electromagnetic waves were irradiated and passed through the surface of the product, and as the heating progressed and penetrated, the energy was attenuated and the temperature rise range decreased.

**Experimental Example 4: Heating pattern in the case of artificially forming layers with different permittivity**

**1. Design of heating body**

In order to solve the problem of partial and non-uniform heating inside the sample, divided sections with different permittivity were formed inside the sample and then heated by microwave irradiation to confirm that uniform heating to the inside of the sample was possible.

The sample used in the above experiment was divided into three bell-shaped divided sections, and heating bodies 1 and 2 were designed so that each divided section had different permittivity. The total size of the heating body was 20mm * 20mm * 20mm, and the thickness of each divided section was the same, and the content ratio of the constituent materials included in the divided section is shown in Table 6 below.

The heating bodies 1 and 2 are non-rotating electric field irradiation devices, and the output of 300W in single mode was irradiated to the upper part of the heating body product for 40 seconds.

[Table 6]

| | Heating body 1 | Heating body 2 |
|---|---|---|
| First divided section | Test 3 (Salt 1%) | Test 1 (Salt 0.3%) |
| Second divided section | Test 3 (Salt 1%) | Test 3 (Salt 1%) |
| Third divided section | Test 3 (Salt 1%) | Test 1 (Salt 0.3%) |

**2. Heating pattern of the upper part and the side part of the heating body product**

Heating patterns of the upper ends of the heating body 1 and heating body 2 were shown in ThermalLight View (Fig. 4). The heating body 1 and heating body 2 were cut vertically from the top center to the bottom center and displayed in ThermalLight View (Fig. 5). As can be seen in the ThermalLight View of Figs. 4 and 5, it was confirmed that the heating body in which the layers of the divided section were formed could be heated to a deeper level.

**3. Vertical and horizontal temperature distribution in the center**

The temperatures of the vertical and horizontal parts passing through the centers of the heating body 1 and heating body 2 were checked and displayed in a graph (Fig. 6: Temperature distribution from the top (left side of the graph) to the bottom (right side of the graph) by cutting the heating body vertically) . The thick line (asterisk) represents heating body 2. The temperature of heating body 2 is almost the same as that of heating body 1 on the surface of the product, but the temperature of heating body 1 decreases as it moves to the bottom. However, the temperature of the heating body 2 is higher inside and the lower part of the product has a higher temperature than that of the heating body 1 The overall heating temperature can be raised by forming a layer with different permittivity. When a high temperature is formed in the central part, the internal temperature is uniformly conducted in all directions after heating is completed, and a more uniform and higher heating effect can be expected with less loss to the outside of the heating body.

The heating body 1 and heating body 2 were cut horizontally to display the temperature distribution from left to right (Fig. 7). The thick line (asterisk) represents heating body 2. It can be seen that the overall temperature rise is larger than that of heating body 1, and the internal temperature rises. As can be seen from the experimental results shown in FIG. 7, even a product having the same shape in the same electromagnetic heating device can exhibit a completely different heating pattern by forming a layer with different permittivity, and a more uniform and higher temperature can be expected at the same heating time.

**Experimental Example 5: Analysis of heating pattern of multi-division structure including divided sections with different permittivity inside**

Among the methods of creating a multi-division structure through the combination of the same or similar food composition in which the composition of food is adjusted within a certain range, there may be a method of including another composition in a form of enclosing the inside of a specific composition. Through this structure, heating uniformity can be improved in the case of foods that are not sufficiently uniformly heated by electromagnetic wave heating and internal heat conduction because the thickness or size of the product is large or thick.

In Experimental Example 5, the change or improvement of the heating pattern was analyzed when a structure having two or more divided sections is formed by inserting another composition whose composition is adjusted inside the product, such as frozen rice, frozen fried rice, or frozen bibimbap, or by changing the composition of an external composition.

The composition used in the experiment was composed of two compositions: composition 2, which is a commercially available instant rice prepared by combining rice and water in a fixed ratio, and composition 1, which is an instant rice prepared by mixing 1% of refined salt with the composition 2. Four types of products were designed by combining composition 2 and composition 1 on the inside and outside of the product. In the case of composition 2, it may be a product having a composition similar to that of instant rice that is eaten after microwave heating, and in the case of composition 1, it may be a product having a composition similar to seasoned products such as fried rice or bibimbap.

The composition ratio of each composition manufactured as above and the combination of compositions in each product are summarized in Table 7 and Table 8 below.

[Table 7]

| Material | Composition 1 | Composition 2 |
|---|---|---|
| Instant Rice | 99% | 100% |
| Refined Salt | 1% | 0% |

[Table 8]

| Constitution | | Constitution 1 | Constitution 2 | Constitution 3 | Constitution 4 |
|---|---|---|---|---|---|
| Composition Distribution | Division 1 (Inside) | Composition 2 | Composition 1 | Composition 2 | Composition 1 |
| | Division 2 (Outside) | Composition 2 | Composition 1 | Composition 1 | Composition 2 |

The results of measuring the permittivity at 2.45 GHz for composition 1 and composition 2 are shown in Table 9 below.

[Table 9]

| Measurement Temperature (°C) | Composition 2 | | Composition 1 | |
|---|---|---|---|---|
| | e' | e" | e' | e" |
| -13 | 6.42 | 2.62 | 5.47 | 2.14 |
| -12 | 6.61 | 2.78 | 5.84 | 2.38 |
| -11 | 6.69 | 2.85 | 6.13 | 2.59 |
| -10 | 6.86 | 2.97 | 6.52 | 2.85 |
| -5 | 8.95 | 4.53 | 15.49 | 8.26 |
| 0 | 18.19 | 9.89 | 43.17 | 19.57 |
| 5 | 40.52 | 18.75 | 43.67 | 19.02 |
| 10 | 47.21 | 19.35 | 44.08 | 18.62 |
| 15 | 49.01 | 18.32 | 44.51 | 18.41 |
| 20 | 50.06 | 17.16 | 44.89 | 18.19 |
| 25 | 50.79 | 15.92 | 45.30 | 18.00 |
| 30 | 51.27 | 14.73 | 45.62 | 17.87 |
| 35 | 51.52 | 13.68 | 45.90 | 17.83 |
| 40 | 51.58 | 12.80 | 46.09 | 17.90 |
| 45 | 51.52 | 12.00 | 46.42 | 18.11 |
| 50 | 51.35 | 11.26 | 46.80 | 18.42 |
| 55 | 51.09 | 10.62 | 47.00 | 18.67 |
| 60 | 50.76 | 10.00 | 46.89 | 18.74 |
| 65 | 50.43 | 9.48 | 45.68 | 18.52 |
| 70 | 50.09 | 9.03 | 47.27 | 19.45 |
| 75 | 49.64 | 5.58 | 47.00 | 19.90 |
| 80 | 49.04 | 8.17 | 46.59 | 20.35 |
| 85 | 48.41 | 7.77 | 46.23 | 20.91 |
| 90 | 47.75 | 7.43 | 45.84 | 21.52 |

(continued)

| Measurement Temperature (°C) | Composition 2 | | Composition 1 | |
|---|---|---|---|---|
| | e’ | e" | e’ | e" |
| 95 | 47.06 | 7.12 | 45.51 | 22.20 |
| 100 | 46.41 | 6.85 | 45.38 | 23.23 |

The design of the final product in which the composition is combined is similar to instant rice in distribution. A structure with divided sections was designed by inserting a composition in the form of a flat cylinder with a diameter of 4 cm and a height of 1 cm in the center of one of the compositions of the same shape as the container.

After the manufactured products of constitutions 1 to 4 were frozen at a temperature of -15.5 °C, It was designed to be placed in the center of a turntable structure rotating at about 5 RPM installed in a 700W consumer microwave oven commercially available in Korea and irradiated with 700W output for 5 minutes. After irradiation, the temperature of the product was checked at three locations: the most center of each component, a position moved 2 cm and a position moved 4 cm from the center to the outside. The temperature, average, and deviation of each point of the products having constitutions 1 to 4 are shown in Table 10 below.

[Table 10]

| Constitution | | Constitution 1 | Constitution 2 | Constitution 3 | Constitution 4 |
|---|---|---|---|---|---|
| Composition Distribution | Division 1 (Inside) | Composition 2 | Composition 1 | Composition 2 | Composition 1 |
| | Division 2 (Outside) | Composition 2 | Composition 1 | Composition 1 | Composition 2 |
| Temperature after irradiation | Center | 50.6 | 52.2 | 48.2 | 54.8 |
| | Point 1 | 39.5 | 36.3 | 34.8 | 40.8 |
| | Point 2 | 84.9 | 80.7 | 81 | 84.7 |
| | Average | 58.3 | 56.4 | 54.7 | 60.1 |
| Standard Deviation | | 23.7 | 22.5 | 23.8 | 22.4 |
| C.V. | | 0.406 | 0.399 | 0.435 | 0.373 |

As can be seen from the results shown in Table 10, it was confirmed that the product of constitution 4 had the highest average temperature, center temperature, and Point 1 temperature, and the temperature of Point 2 was almost similar to that of the product of constitution 1. In addition, it was confirmed that the standard deviation of the temperature was the lowest and the coefficient of variation (C.V., standard deviation divided by mean, checks for uniformity in distributions with different means; the smaller the number, the more uniform) for confirming the uniformity was the lowest. In this way, the effect of improving microwave heating uniformity and heating rate was confirmed through a constitution in which the composition of the same or similar food with a slight adjustment of the salt composition of the composition was combined.

**Experimental Example 6: Production of product with a layer with different permittivity**

Depending on the physical properties of food, the processing method, and the flow of the manufacturing process, there may be cases where it is easy to make physical layers with different permittivity and cases where it is difficult.

**1. When a layered structure can be easily formed after manufacturing product parts with different permittivity**

In the case of food that can be packaged in a container without a standardized shape, such as cooked rice or heat-processed grain-based food, noodles, pasta, and curry products with high viscosity, a layered structure can be formed by the following manufacturing method.

(a) Manufacture semi-finished products with two or more types of formulations having different permittivity.
(b) Load the first layer on the container or surface component (using a nozzle type/bucket type Auto-Scaler facility, etc.)
(c) Load the second layer with different permittivity on top of the first layer.

(d) Load the third layer with different permittivity on top of the second layer.
(e) Perform the above process as many times as necessary, and perform additional processes (freezing/sterilization, etc.) after packaging and surface treatment.

For food products having an atypical portion in which particles and liquids are mixed in product components, such as dumplings and burritos, a layered structure can be formed by the following manufacturing method.

(a) Prepare dumpling/burrito fillings with two or more combinations having different permittivity.
(b) Form the layered structure by injecting two or more types of formulations with a double filling nozzle or the like.
(c) After filling the outer shell of dumplings/burritos, etc. with fillings and treating the skin, perform additional processes.

**2. When it is difficult to form a layered structure after manufacturing product parts with different permittivity**

Products with standardized shapes such as meat/fish protein and bread/rice cake/cookies, or products in the form of low-viscosity pastes or products that can be mixed and mixed during structure formation, such as solidification/freezing of liquid phase during processing, can form a layered structure by the following manufacturing method.

(a) Prepare two or more formulations with different permittivity.
(b) If the formulation, dough, etc. has sufficient viscosity, inject formulations with different permittivity by using a two-layer filling/lamination injection nozzle to form a layered structure. If the viscosity is not sufficient, repeat the process of filling and freezing/solidifying the second layer after filling the first layer with the formulation 1 in a container, etc., and then proceeding with freezing/solidification to form a layered structure of the product.
(c) After completing the layered structure, perform packaging and outer skin treatment, followed by additional processes (sterilization/heat treatment/freezing, etc.).

**3. When it is difficult to artificially form a physical layered structure**

Food products that need to maintain a circular shape without being crushed can form a layered structure by the following manufacturing method.

(a) In the case of a product capable of forming a layered structure with a mill-feuille type thin layer, layers having different permittivity can be manufactured by stacking two or more layers subjected to immersion treatment to have different permittivity.
(b) If it is impossible to form a layered structure such as thick meat, layers with different permittivity can be prepared by preparing two or more immersion/injection solutions capable of adjusting permittivity differently, injecting them into the deep layer of the product and immersing them in the surface layer.

**Experimental Example 7: Multi-division structure design for food that can be heated uniformly**

**1. Multi-division structure design to solve non-uniform heating of conventional products**

(1) Confirmation of non-uniform heating problem

Recognize non-uniform heating problems found in consumer claims and during cooking tests, such as and mass production deviation verification.

(2) Experimental validation

Perform experimental verification of whether real problems occur reproducibly. For example, whether a problem occurs is verified through reference data that serves as a reference when setting the cooking algorithm, such as temperature analysis of the main heating spot, change in yield after heating, change in surface moisture, etc.

(3) Measurement of characteristic values

If it is determined that the non-uniform heating problem of the product needs to be improved, the characteristic values (permittivity, specific heat, thermal conductivity, density/porosity, etc.) of the product are measured. If the characteristic values measured at the time of initial product design exist, the changed characteristic values that caused the change in the heating pattern are checked by comparing them with the currently measured characteristic values. Check the history of changes in the manufacturing process and raw materials that caused the change in the corresponding characteristic value.

(4) Analytical validation

Evaluate the heating non-uniformity caused by the change in the characteristic value by using the measured characteristic value and the electromagnetic, radiation, and convection heating characteristic data of the heating device. Analysis of movement pattern and change pattern of major heating spots according to changes in characteristic values.

(5) Setting multi-division partitions and adjusting characteristic values

Set the characteristic value adjustment range to induce changes in the arrangement pattern and intensity of the changed main heating spot. In the case of electromagnetic heating, when the intensity of the surface layer heating spot is out of the specific heat or thermal conductivity acceptance range of the spot, the adjustment value of the characteristic value is set in the direction of reducing the loss factor of permittivity. When the intensity of a specific internal spot is lower than the average value, the adjustment value of the characteristic value is set in the direction of increasing the loss factor of the corresponding spot.

In addition, the number of divisions is set with reference to the number and positions of main heating spots.

The integration or separation of the divided sections is performed at an appropriate level by determining whether the number and distribution of the divisions are acceptable in the manufacturing process of the product. For example, in the case of a multilayer molding process in which the maximum number of characteristic value adjustment combinations does not exceed 3, the divided section should not exceed 3 by focusing on the top/bottom division. In the case of multi injection, set the divided section within the range that does not exceed the molding limit of the machine.

The heating pattern is predicted from the division design obtained through the previously performed analytical verification method, and a practically usable verification experimental group is determined.

(6) Construction and validation of validation samples

A sample is configured by the above design, and the shape and distribution are verified to see if the multi-division section structure is implemented according to the design. The configured verification sample is subjected to heating analysis with the target cooking device.

**2. Multi-division structure design to solve non-uniform heating in new product development**

(1) Confirmation of food concept and form

Since food has a shape concept that a product in the corresponding category should have in general, the list and range of shape-related variables that can be changed while complying with the guidelines of the corresponding concept are limited.

(2) Measurement of characteristic values

If the raw material and compounding ratio of the product are set to a certain level or more, measure the physical properties of the prototype compound, such as permittivity, specific heat, thermal conductivity, density/porosity, etc.

(3) Analytical validation

The heating uniformity is evaluated by combining the characteristic values obtained through the above analysis and the utilization of previously analyzed data and the heating characteristics (electric field, radiation, convection, etc.) of the target cooking device possessed.

(4) Adjustment of adjustable shape parameters

In order to reduce the expected deviation obtained through the above analysis, an additional analysis is conducted to see if the deviation can be improved by adjusting the tunable shape parameters obtained in item (1) above.

(5) Multi-division structure setting and characteristic value adjustment value setting

When it is expected that the heating non-uniformity problem is not sufficiently improved by the above adjustment, a multi-division structure design is performed. The design proceeds through the same method as described in item (5) "Setting multi-division partitions and adjusting characteristic values" of "1. Multi-division structure design to solve non-uniform heating of conventional products".

(6) Construction and validation of validation samples

The designed multi-division structure is verified in the same manner as in item (6) of "1. Multi-division structure design to solve non-uniform heating of conventional products".

**3. Multi-division structure design when heating uniformity is required in various home appliances**

(1) Check list of target cooking appliances

Check the list of target cooking devices to support cooking of the product. If there is existing secured data for the device in the list, refer to the device data. If there is no retained data for the device, the device is additionally registered through the device addition process or deleted from the support list.

(2) Measurement of characteristic values

Measure the characteristic value of the product. If previously measured data exists, check the product information DB to see if there have been any changes to the product since the point of measurement, and use the data if there is no change. If there is a product change since the original measurement point, display the data as out-date and proceed with new measurement.

(3) Analytical validation of target cooking appliance

Identify the main heating spots of the corresponding devices and specify common heating spots. Estimate the cooking time that transfers similar heat by checking the deviation of each device in the amount of heat transferable in the common heating area. When heating during the predicted cooking time, check the amount of heat that can be transferred to the non-heating area through conduction, and predict whether the specific heat and thermal conductivity of the spot are at a level that can secure heating uniformity. Through the above process, a list of devices for which a similar heating pattern is secured is extracted, and a 'supportable device list' is finally determined.

(4) Checking common heating spots and setting deviation estimates

Based on the transferable heat amount confirmed in the process of item (3) above, the expected heating temperature of the spot when heating the product is predicted. Proceeds, predicts, and determines additional cooking time settings that can compensate for temperature deviations by device.

(5) Multi-division structure setting and characteristic value adjustment value setting

With the above analysis completed, it is determined whether a multi-division structure is required. If it is determined that setting a multi-division structure is necessary to secure heating uniformity, it proceeds through the same method as the method described in item (5) "Setting multi-division partitions and adjusting characteristic values" of "1. Multi-division structure design to solve non-uniform heating of conventional products".

(6) Construction and validation of validation samples

The designed multi-division structure is verified in the same manner as in item (6) of "1. Multi-division structure design to solve non-uniform heating of conventional products".

In the above, a representative Example of the present invention has been described as an example, but the scope of the present invention is not limited only to the specific Example as described above, and may be appropriately changed within the scope described in the claims of the present invention by those skilled in the art.

**Claims**

1. A single-category food comprising two or more divided sections having different permittivities, wherein the food is uniformly heated by microwave irradiation.

2. The food according to claim 1, wherein the two or more divided sections having different permittivities have different dielectric constants or dielectric loss factors.

3. The food according to claim 1, wherein the characteristic value difference between the divided section with the highest dielectric constant or dielectric loss factor and the divided section with the lowest dielectric constant or dielectric loss factor among the divided sections having different permittivities is 95% or less of the characteristic value in the divided section with the highest dielectric constant or dielectric loss factor.

4. The food according to claim 1, wherein the two or more divided sections having different permittivities have different components or contents that affect permittivity.

5. The food according to claim 4, wherein the component affecting the permittivity is at least one selected from the group consisting of water, salt, protein, carbohydrate, and fat.

6. The food according to claim 1, wherein the two or more divided sections having different permittivities includes the form of a layer formed by adjoining one divided section to another divided section.

7. The food according to claim 1, wherein one divided section of the two or more divided sections having different permittivities is interspersed within another divided section.

8. The food according to claim 1, wherein the two or more divided sections having different permittivities have a core-shell shape in which one divided section surrounds another divided section.

9. A production method for a food uniformly heated by microwave irradiation, comprising the steps of:

   (a) dividing a single-category food into two or more parts;
   (b) differentiating components or their contents that affect permittivity in the two or more parts so that the two or more divided parts have different permittivities; and
   (c) producing a single-category food containing two or more divided sections having different permittivities using two or more parts having different permittivities.

10. The production method for a food according to claim 9, wherein in the step (b), the component affecting the permittivity is at least one selected from the group consisting of water, salt, protein, carbohydrate, and fat.

11. The production method for a food according to claim 9, wherein in the step (c), the divided section is formed so that the two or more divided sections having different permittivities include the form of a layer formed by adjoining one divided section to another divided section.

12. The production method for a food according to claim 9, wherein in the step (c), the divided section is formed so that one divided section of the two or more divided sections having different permittivities is interspersed within another divided section.

13. The production method for a food according to claim 9, wherein in the step (c), the divided section is formed so that the two or more divided sections having different permittivities have a core-shell shape in which one divided section surrounds another divided section.

14. A method of designing a structure of a divided section in a single-category food to improve heating uniformity, comprising the steps of:

   (a) measuring one or more characteristic values selected from the group consisting of permittivity, specific heat, thermal conductivity, density and porosity of the single-category food;
   (b) evaluating non-uniformity of heating of the single-category food using the measured characteristic value and the heating characteristic data of a heating device; and

(c) determining the number, size, or positional relationship of the divided section in the food, and adjusting the characteristic values of the food within the divided section, when non-uniformity of heating of the single-category food exists.

**15.** The method according to claim 14, wherein the evaluation of the non-uniformity of heating in the step (b) is performed by analyzing the change or movement pattern of the heating spot inside the single-category food.

**16.** The method according to claim 14, wherein the number of divided sections in the step (c) is determined by analyzing the number or location of the heating spots.

**17.** The method according to claim 14, wherein the heating characteristic data of the heating device in the step (b) is heating characteristic data by electromagnetic, radiation or convection.

**18.** The method according to claim 14, wherein the food is a conventionally existing food or a new food.

【Figure 1】

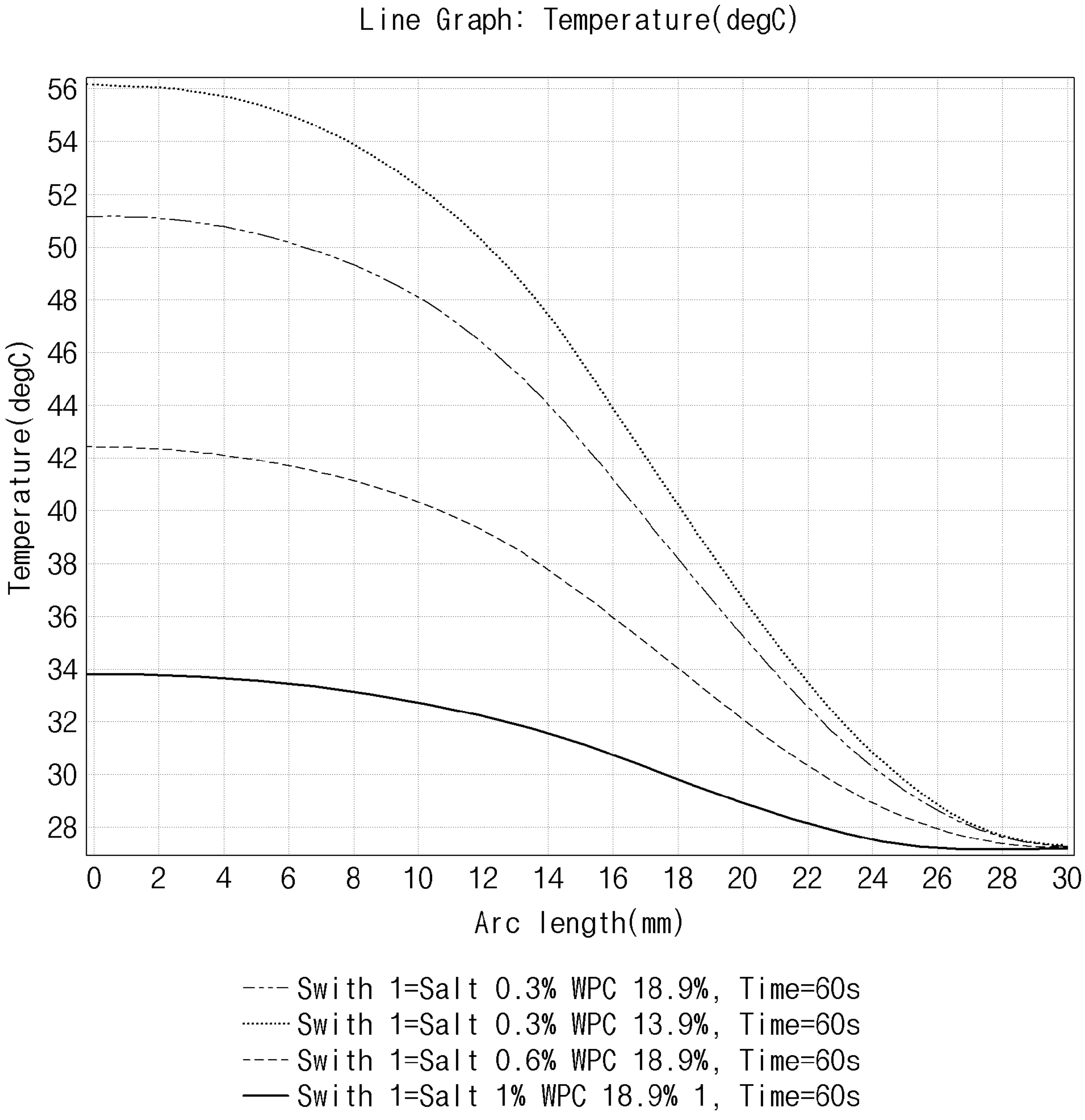
Line Graph: Temperature(degC)
Temperature(degC)
56
54
52
50
48
46
44
42
40
38
36
34
32
30
28
0
2
4
6
8
10
12
14
16
18
20
22
24
26
28
30
Arc length(mm)
Swith 1=Salt 0.3% WPC 18.9%, Time=60s
Swith 1=Salt 0.3% WPC 13.9%, Time=60s
Swith 1=Salt 0.6% WPC 18.9%, Time=60s
Swith 1=Salt 1% WPC 18.9% 1, Time=60s

【Figure 2】

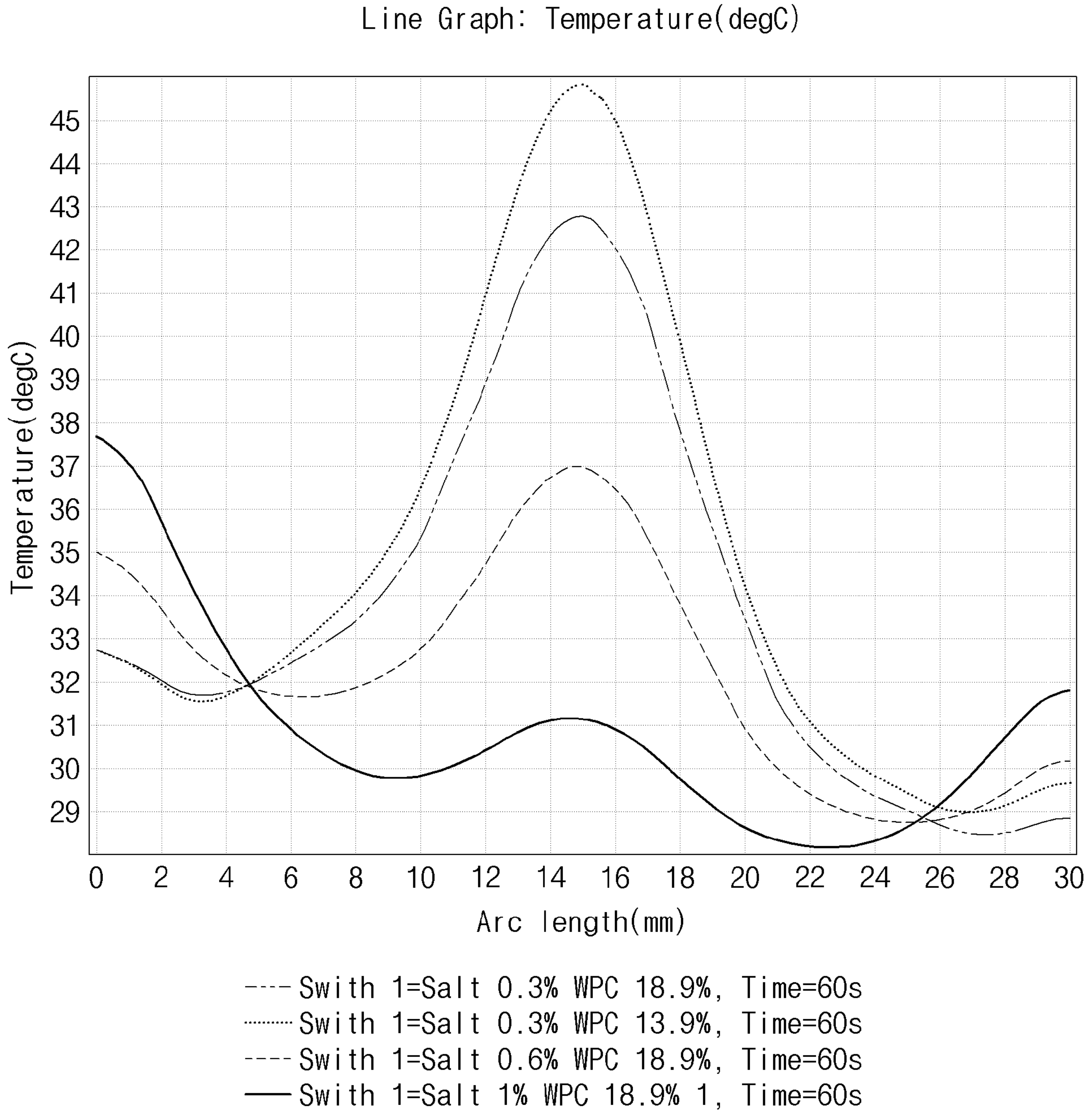
Line Graph: Temperature(degC)
Temperature(degC)
45
44
43
42
41
40
39
38
37
36
35
34
33
32
31
30
29
0
2
4
6
8
10
12
14
16
18
20
22
24
26
28
30
Arc length(mm)
Swith 1=Salt 0.3% WPC 18.9%, Time=60s
Swith 1=Salt 0.3% WPC 13.9%, Time=60s
Swith 1=Salt 0.6% WPC 18.9%, Time=60s
Swith 1=Salt 1% WPC 18.9% 1, Time=60s

【Figure 3】

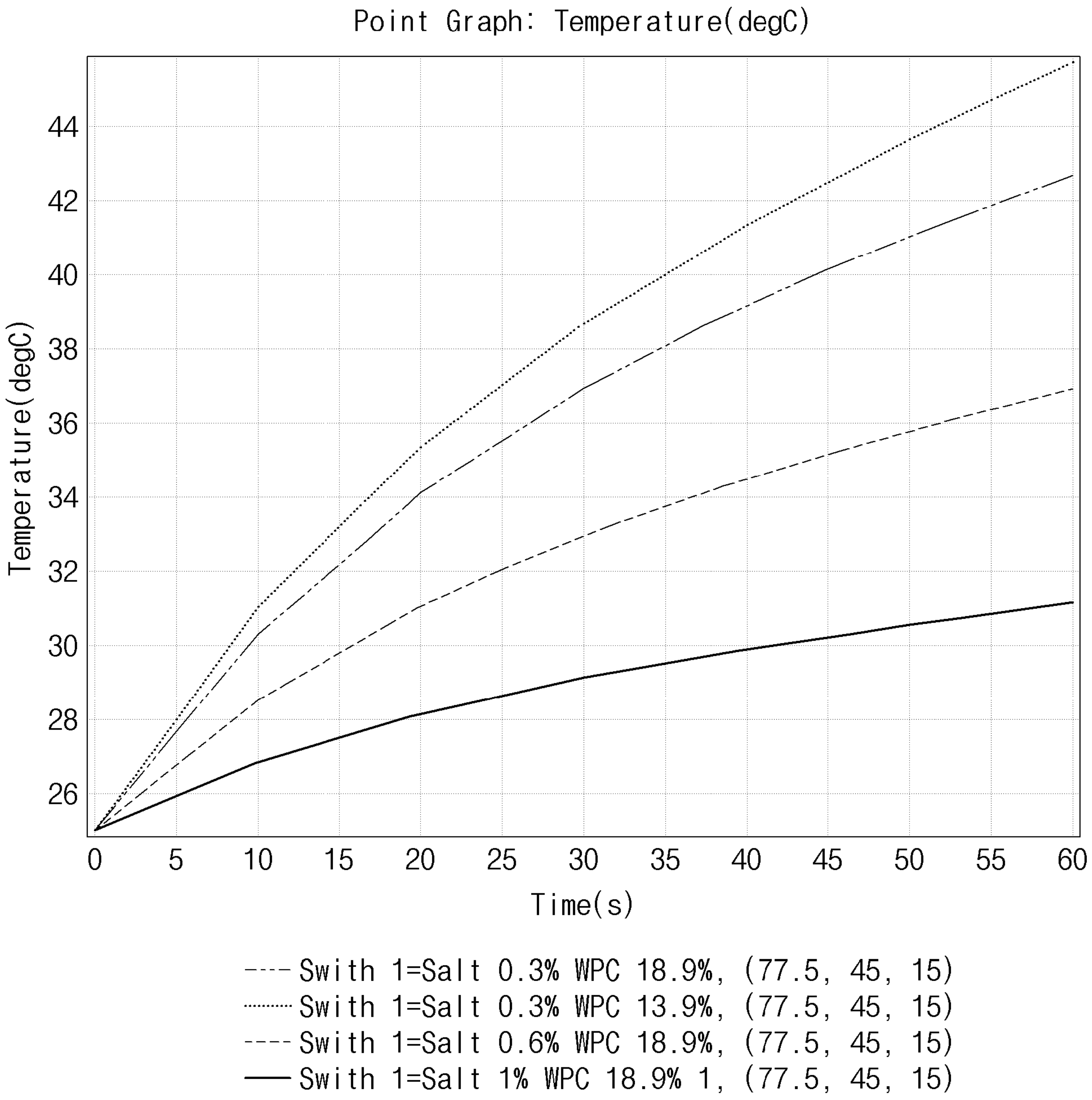
Point Graph: Temperature(degC)
Temperature(degC)
44
42
40
38
36
34
32
30
28
26
0
5
10
15
20
25
30
35
40
45
50
55
60
Time(s)
Swith 1=Salt 0.3% WPC 18.9%, (77.5, 45, 15)
Swith 1=Salt 0.3% WPC 13.9%, (77.5, 45, 15)
Swith 1=Salt 0.6% WPC 18.9%, (77.5, 45, 15)
Swith 1=Salt 1% WPC 18.9% 1, (77.5, 45, 15)

【Figure 4】

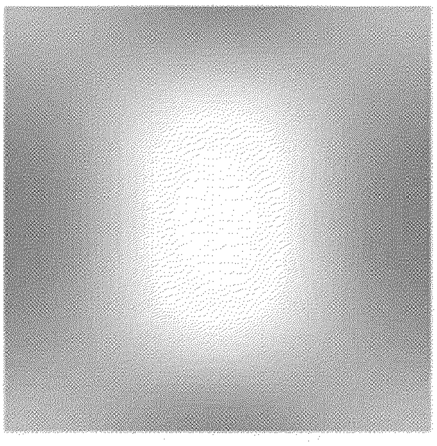

Heating body 1

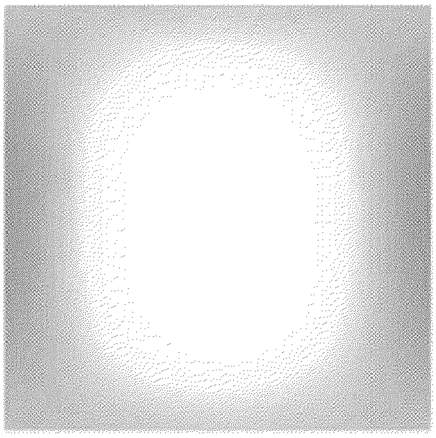

Heating body 2

【Figure 5】

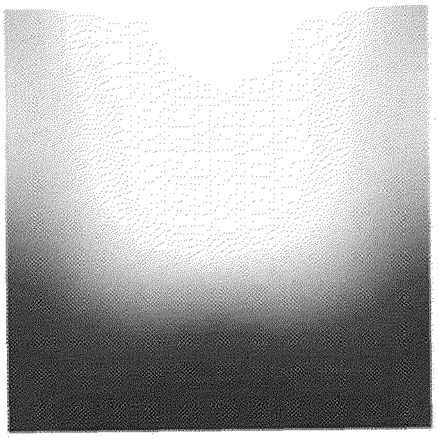

Heating body 1

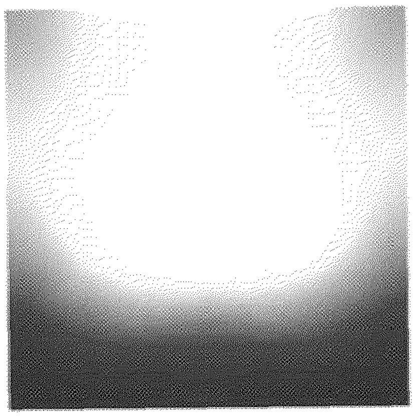

Heating body 2

【Figure 6】

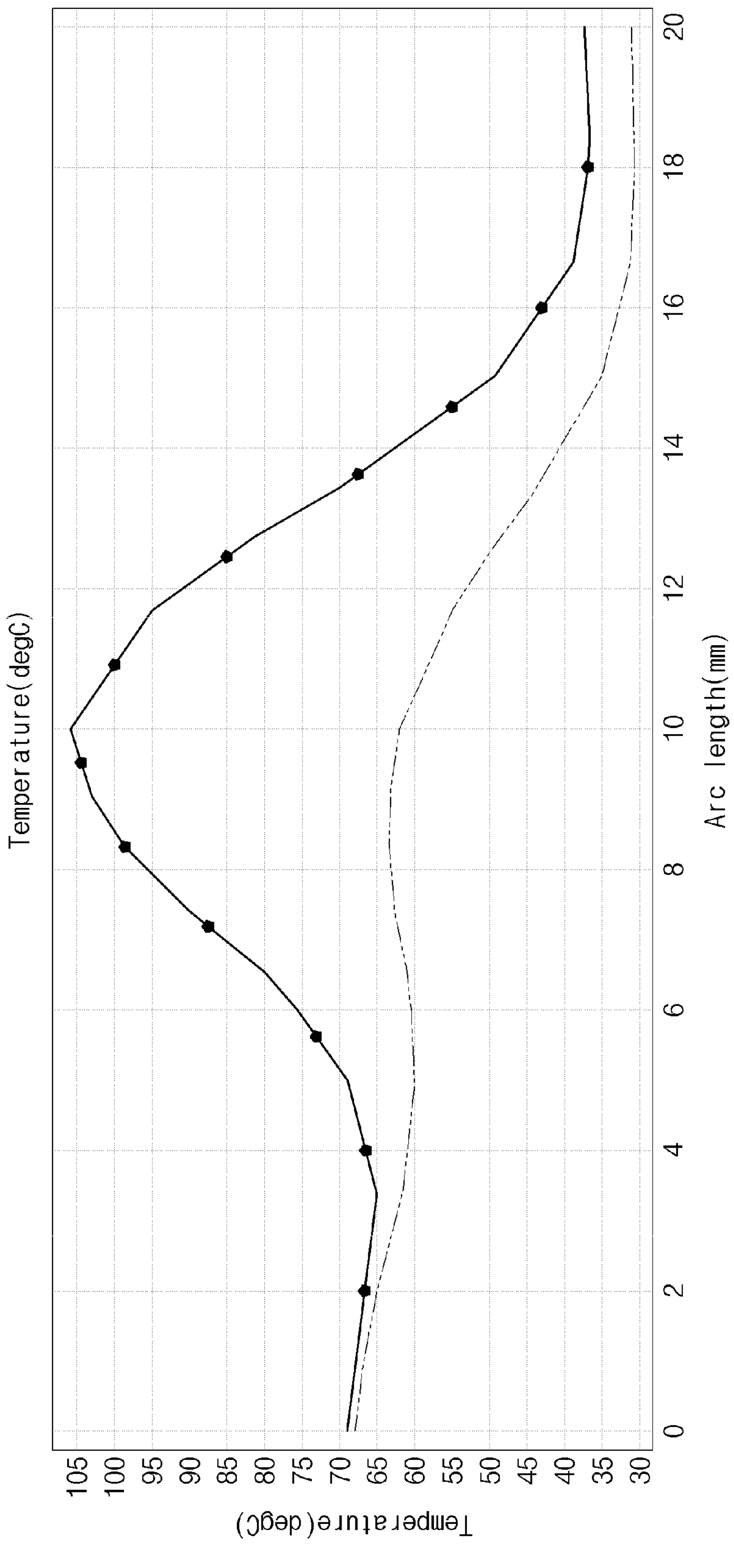
Temperature(degC)
Arc length(mm)
Temperature(degC)
0 2 4 6 8 10 12 14 16 18 20
105 100 95 90 85 80 75 70 65 60 55 50 45 40 35 30

【Figure 7】

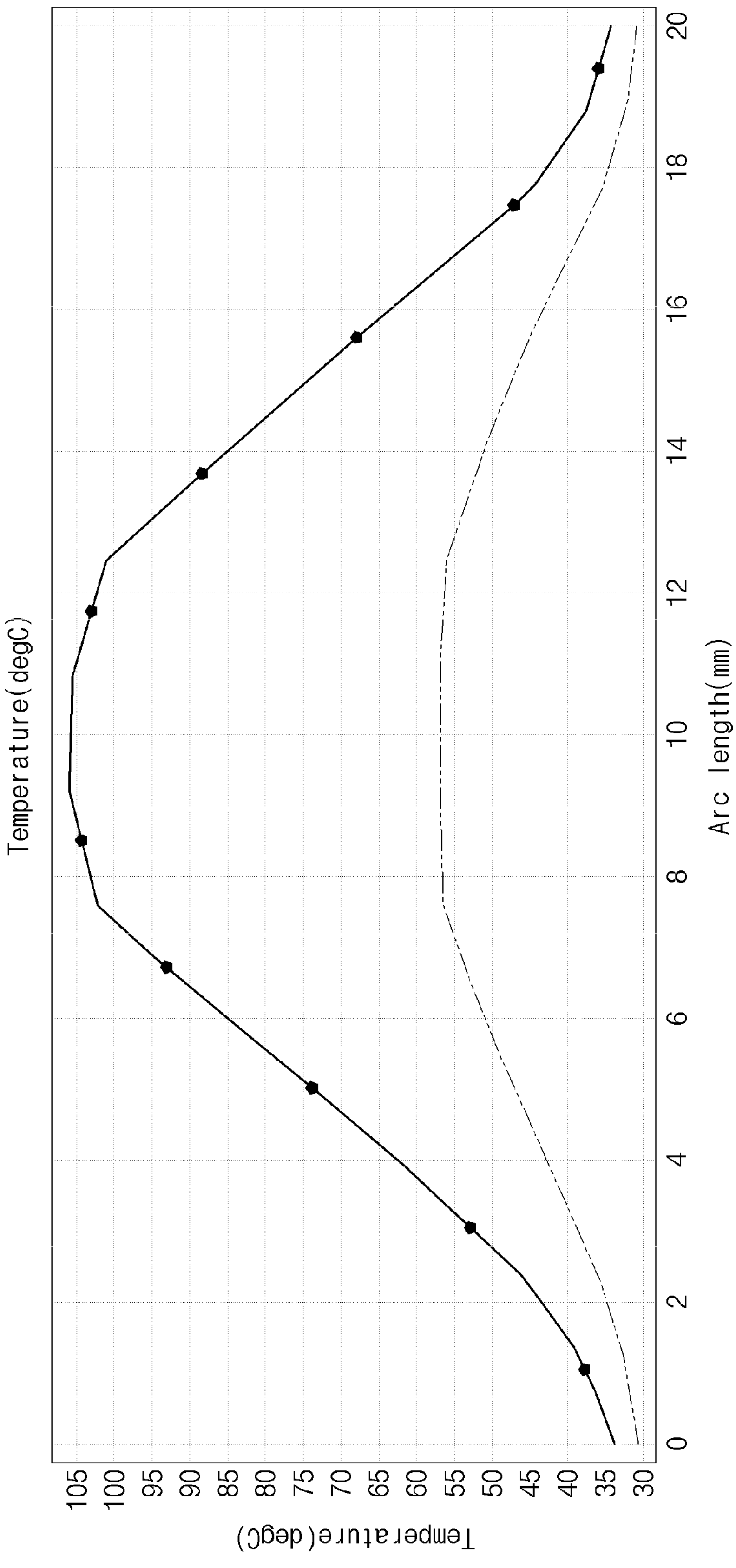
Temperature(degC)
Arc length(mm)
Temperature(degC)
0
2
4
6
8
10
12
14
16
18
20
105
100
95
90
85
80
75
70
65
60
55
50
45
40
35
30

## INTERNATIONAL SEARCH REPORT

International application No.
**PCT/KR2022/002913**

### A. CLASSIFICATION OF SUBJECT MATTER

**A23L 3/00**(2006.01)i; **A23L 3/01**(2006.01)i; **A23L 5/10**(2016.01)i; **H05B 6/64**(2006.01)i

According to International Patent Classification (IPC) or to both national classification and IPC

### B. FIELDS SEARCHED

Minimum documentation searched (classification system followed by classification symbols)

A23L 3/00(2006.01); A23L 1/48(2006.01); A23L 3/01(2006.01); B65D 81/34(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음식(food), 마이크로웨이브 가열(microwave heating), 분할(division), 유전상수(dielectric constant), 가열 균일성(heating uniformity)

### C. DOCUMENTS CONSIDERED TO BE RELEVANT

| Category* | Citation of document, with indication, where appropriate, of the relevant passages | Relevant to claim No. |
|---|---|---|
| X | JP 2005-278503 A (FUJI OIL CO., LTD.) 13 October 2005 (2005-10-13)<br>See paragraphs [0003], [0006], [0017], [0024] and [0026]. | 1-7,9-12 |
| Y | | 8,13 |
| A | | 14-18 |
| Y | JP 2017-112920 A (TOKAN KOGYO CO., LTD.) 29 June 2017 (2017-06-29)<br>See paragraphs [0005] and [0007]; and figure 2. | 8,13 |
| X | SONG, Chunfang et al. Modeling Microwave Heating of Frozen Chinese Fast Foods Based on Dielectric Properties. International Journal of Food Engineering. 2018, Article No. 20180169, pp. 1-13.<br>See abstract; pages 2-3, 6, 8-10 and 12; figure 5; and table 1. | 14-18 |
| A | SOTO-REYES, Nohemi et al. Effects of shape and size of agar gels on heating uniformity during pulsed microwave treatment. Journal of Food Science. 2015, vol. 80, no. 5, pp. E1021-E1025.<br>See entire document. | 1-18 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 June 2022** | **09 June 2022** |
| Name and mailing address of the ISA/KR<br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2019)

INTERNATIONAL SEARCH REPORT

International application No.
**PCT/KR2022/002913**

**C. DOCUMENTS CONSIDERED TO BE RELEVANT**

| Category* | Citation of document, with indication, where appropriate, of the relevant passages | Relevant to claim No. |
|---|---|---|
| PX | KR 10-2358919 B1 (CJ CHEILJEDANG CORPORATION) 08 February 2022 (2022-02-08) See paragraphs [0078]-[0093]; and claims 1-13. (*This document is the published patent of a priority application of the present internati onal application.) | 1-18 |

Form PCT/ISA/210 (second sheet) (July 2019)

**INTERNATIONAL SEARCH REPORT**

International application No.
**PCT/KR2022/002913**

**Box No. III Observations where unity of invention is lacking (Continuation of item 3 of first sheet)**

This International Searching Authority found multiple inventions in this international application, as follows:

The invention of group 1: claims 1-13 pertain to a single category food including two or more partition areas having different permittivities, and a method for manufacturing the food,
The invention of group 2: claims 14-18 pertain to a method for designing the structure of a partition area in the food in order to improve heating uniformity of a single category food.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2019)

**INTERNATIONAL SEARCH REPORT**
**Information on patent family members**

International application No.
**PCT/KR2022/002913**

| Patent document cited in search report | Publication date (day/month/year) | Patent family member(s) | Publication date (day/month/year) |
|---|---|---|---|
| JP 2005-278503 A | 13 October 2005 | None | |
| JP 2017-112920 A | 29 June 2017 | None | |
| KR 10-2358919 B1 | 08 February 2022 | None | |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20160331004 A